# EUROPEAN PATENT APPLICATION

(11) **EP 2 328 276 A1**
(43) Date of publication of application: **01.06.2011**
(21) Application number: 09177408.3
(22) Date of filing: 27.11.2009
(51) Int. Cl.: H04B 1/38, H04B 1/54, H04W 84/08

(54) **Enhanced push-to-talk communication system**

(71) Applicant: Nederlandse Organisatie voor Toegepast -Natuurwetenschappelijk Onderzoek TNO, 2628 VK Delft (NL)
(72) Inventor: Overduin, Rudy, 2253 HP Voorschoten (NL); Rijsdijk, Petrus Johannes Maria, 2353 PL Leiderdorp (NL); Gustafsson, Nils Anders Stefan, 2612 CT Delft (NL)
(74) Representative: Hatzmann, Martin

(57) **Abstract**

A push-to-talk communication system (1) comprises user units (2) arranged for radio communication, one user unit (2A) being designated as main user unit. The system further comprising a device (3) for enhancing communication, which device is arranged for use with the main user unit and comprises:
• a directional antenna (31) for transmitting and receiving radio signals,
• a band-pass filter (32) for selecting a frequency band of the radio signals,
• a bidirectional amplifier (33) for amplifying radio signals alternatingly in a transmitting and in a receiving direction,
• a control unit (34) for controlling the bidirectional amplifier (32) in response to a sensor signal, and
• a sensor (35) for detecting whether the user unit (2A) is transmitting or receiving and for producing the sensor signal in response thereto, which sensor is galvanically isolated from the user unit.

The communication system (1) may be a Terrestrial Trunked Radio system, commonly known as TETRA system, more in particular a Direct Mode Operations TETRA system.

## Description

The present invention relates to an enhanced communication system, and a method and a device for enhancing a communication system. More in particular, the present invention relates to enhancing communication in a push-to-talk communication system comprising user units arranged for radio communication, one user unit being designated as main user unit.

Push-to-talk (PTT) communication systems utilize a single channel to communicate in both directions, switching between sending and receiving by operating a button on the handset. The classic example of a push-to-talk communication system is a pair of walkie-talkies, which allows alternating communication between two or more users which are in each other's (close) proximity.

A well-known communication system suitable for push-to-talk operation is TETRA (Terrestrial Trunked RAdio), which is used in many countries by police forces, emergency services, the national army, and/or train companies. In some countries, TETRA systems are known by another name, such as C2000 in the Netherlands.

TETRA allows one-to-one, one-to-many and many-to-many connections, unlike cellular systems which only allow one-to-one connections. Although TETRA may use a cellular network, it can also operate in Direct MOde (DMO) in which no cellular network is used and direct push-to-talk communication between the handsets takes place. In either mode, a so-called dispatcher may operate a handset so as to relay information and coordinate the operations of, for example, an emergency crew.

Unfortunately TETRA and similar communication systems have the disadvantage that the wireless connections between the user units (that is, the handsets) are not always good, resulting in signal distortions and bad audio quality. This is particularly the case in buildings, tunnels and mines, where walls block or at least severely attenuate the signal transmission. It will be clear that a good audio quality is essential for communication between members of an emergency crew, and that a lost wireless connection may have fatal consequences.

It is therefore highly desirable that a good signal quality of the wireless communications within a push-to-talk communication system is maintained, also (in the case of TETRA and similar systems) in direct mode operating conditions, that is, without the assistance of a cellular network. It is known *per se* to use booster circuits for boosting the signal level of each individual user unit so as to improve the signal quality. However, this requires modifying each user unit, is relatively expensive and may still not result in a satisfactory minimum audio quality level. In addition, typical known power booster circuits are unsuitable for push-to-talk applications.

Korean Patent Application KR 2000 0067527, for example, discloses a power booster circuit for a portable CDMA (Code Division Multiple Access) terminal in a communication system using cells and base stations. This known power booster circuit, which has a variable gain and uses several distinct frequencies, is not suitable for push-to-talk systems which use a single frequency for both transmission and reception. In addition, every portable terminal will have to be provided with this known power booster circuit for it to be effective.

European Patent Application EP 0 599 659 discloses a booster for use with a portable radio apparatus. The power amplifier of the booster is unidirectional, thus making the known booster unsuitable for push-to-talk systems. In addition, the power amplifier is switched on and off in response to a control signal generated by a control signal generator circuit of the portable radio apparatus. Accordingly, the known booster is not suitable for portable radio apparatus which is not fitted with such a control signal generator circuit, and can therefore not be used with existing portable radio apparatus.

It is an object of the present invention to overcome these and other problems of the Prior Art and to provide a device for enhancing communication in a push-to-talk communication system which improves both the transmission and the reception while requiring a minimum amount of modifications to the communication system.

It is a further object of the present invention to provide a method of enhancing communication in a push-to-talk communication system and an enhanced push-to-talk communication system which offer the above-mentioned advantages.

Accordingly, the present invention provides a device for enhancing communication in a push-to-talk communication system comprising user units arranged for radio communication, one user unit being designated as main user unit and the device being arranged for use with the main user unit, the device comprising:
- a directional antenna for transmitting and receiving radio signals,
- a band-pass filter for selecting a frequency band of the radio signals,
- a bidirectional amplifier for amplifying radio signals alternatingly in a transmitting and in a receiving direction,
- a control unit for controlling the bidirectional amplifier in response to a sensor signal, and
- a sensor for detecting whether the user unit is transmitting or receiving and for producing the sensor signal in response thereto, which sensor is galvanically isolated from the user unit.

By providing a directional antenna which is suitable for both transmitting and receiving radio signals, an initial signal gain can already be achieved (it will be understood that the well-known term "directional antenna" refers to an antenna having a higher gain in one or more main directions than in other directions). By providing a band-pass filter, a suitable frequency band can be selected and other frequency bands can be excluded. By providing a control unit, the bidirectional amplifier can be switched between amplifying radio signals which are to be transmitted and amplifying received radio signals. And by providing a galvanically isolated sensor, the bidirectional amplifier can be switched without influencing the operation of the user unit. The device of the present invention is thus capable of improving the signal levels and hence the audio quality of both the transmitted and received radio signals.

According to an important further aspect of the present invention, the device is arranged for use with the main user unit, one user unit of the system being designated as said main user unit. In typical embodiments, the main user unit will be used by the "dispatcher" referred to above and will be used to relay information and/or to coordinate and direct the operations of a crew, for example, but not exclusively, an emergency crew. In a communication system according to the present invention, the other user units will typically not be provided with an enhancing device: the system will typically comprise a single main or primary user unit, provided with an enhancing device, and a plurality of other or secondary user units which are not provided with an enhancing device. Thus a single enhancing device typically suffices for a system having a plurality of user units. This feature makes the present invention both relatively inexpensive and simple to implement.

It is possible for the bidirectional amplifier to have the same amplification in both direction. In a preferred embodiment, however, the bidirectional amplifier is arranged for providing a greater amplification in the receiving direction than in the transmitting direction. This has the advantage that any received radio signals are strongly amplified, while limiting the relative amplification of transmitted radio signals, thus avoiding any undesired imbalance between the user unit provided with the enhancing device and the other user units.

It is further preferred that the directional antenna has a high gain, more preferably at least 10 dBA, but higher antenna gains, for example 20dBA, are also possible and will further improve the effectiveness of the present invention.

Several types of antenna having a high gain can be used. In a preferred embodiment, however, the directional antenna has a substantially cylindrical body, the diameter of the body preferably being at least 50 cm, more preferably at least 60 cm, and the length of the body being at least 60 cm, preferably 70 cm. By using a substantially cylindrical antenna, such as a so-called can antenna (also referred to as "cantenna"), of suitable dimensions a high gain can be used with an antenna having a simple and relatively compact structure. A can antenna has a cylindrical body which is closed at one end and open at the other end. Although a diameter of at least 50 cm is preferred, smaller antennas can be used, for example antennas having a diameter of approximately 20 cm.

Although the device of the present invention may be suitable for various types of communication systems, it is preferred that the band-pass filter is designed for a terrestrial trunked radio (TETRA) direct mode operations (DMO) frequency range, for example 397.5 MHz. In some embodiments, the band-pass filter may be adjustable (e.g. switchable) so as to be suitable for more than one type of frequency range, for example to suit various types of communication systems.

The present invention also provides a push-to-talk communication system, comprising user units arranged for radio communication, one user unit being designated as main user unit, the system further comprising a device for enhancing communication, the device being arranged for use with the main user unit, the device comprising:
- a directional antenna for transmitting and receiving radio signals,
- a band-pass filter for selecting a frequency band of the radio signals,
- a bidirectional amplifier for amplifying radio signals alternatingly in a transmitting and in a receiving direction,
- a control unit for controlling the bidirectional amplifier in response to a sensor signal, and
- a sensor for detecting whether the user unit is transmitting or receiving and for producing the sensor signal in response thereto, which sensor is galvanically isolated from the user unit.

The communication system is preferably a TETRA (Terrestrial Trunked RAdio) system, although the invention is not so limited.

The present invention additionally provides a method of enhancing communication in a push-to-talk communication system comprising user units arranged for radio communication, one user unit being designated as main user unit, the method comprising the step of coupling a device for enhancing communication to the main user unit, the device comprising:
- a directional antenna for transmitting and receiving radio signals,
- a band-pass filter for selecting a frequency band of the radio signals,
- a bidirectional amplifier for amplifying radio signals alternatingly in a transmitting and in a receiving direction,
- a control unit for controlling the bidirectional amplifier in response to a sensor signal, and
- a sensor for detecting whether the user unit is transmitting or receiving and for producing the sensor signal in response thereto, which sensor is galvanically isolated from the user unit.

The communication system preferably operates in direct mode.

The present invention will further be explained below with reference to exemplary embodiments illustrated in the accompanying drawings, in which:
Fig. 1 schematically shows a communication system according to the present invention.
Fig. 2 schematically shows a user unit provided with an enhancing device according to the present invention.
Fig. 3 schematically shows a circuit diagram of an exemplary embodiment of an enhancing device according to the present invention.
Fig. 4 schematically shows a can antenna as may be used in an enhancing device according to the present invention.

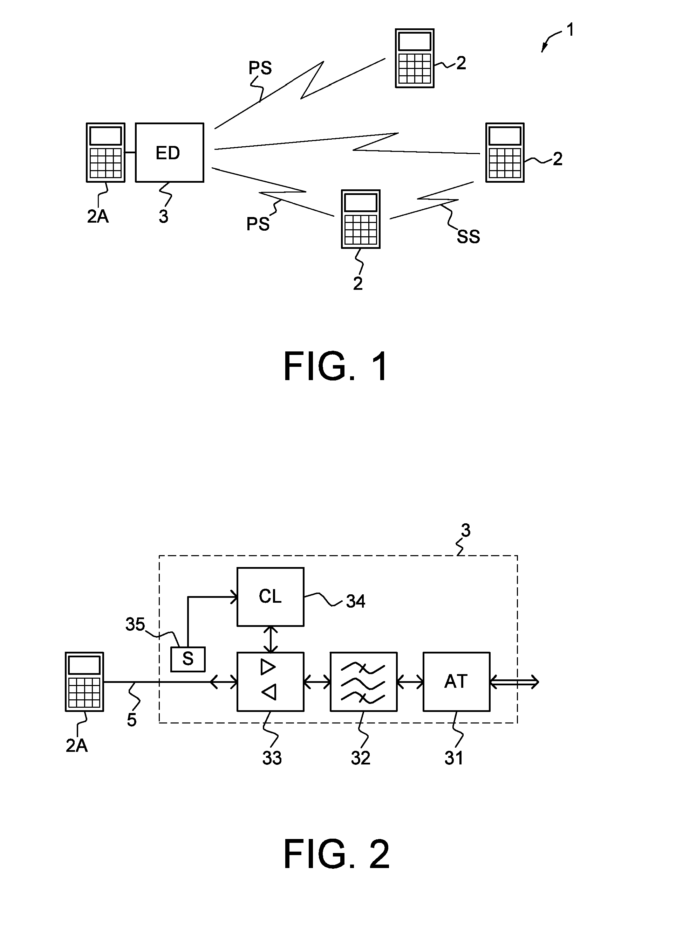

The communication system 1 shown merely by way of non-limiting example in Fig. 1 comprises user units 2 and an enhancing device (ED) 3. One user unit, labelled 2A, serves as a main or primary user unit, while the other user units are secondary user units. As illustrated in Fig. 1, the enhancing device 3 is coupled to the main user unit 2A by a cable (5 in Fig. 2), although a wireless connection is also possible.

The communication system 1 is a wireless push-to-talk communication system providing direct communication between the user units, without involving a cellular network. Two types of direct communication are possible:
1. between the primary unit on the one hand and the secondary units on the other hand: primary-secondary communication PS, and
2. between the secondary units: secondary-secondary communication SS.
Both types of direct communication are possible in both directions, that is, are preferably bidirectional.

The communication system 1 is preferably a TETRA (Terrestrial Trunked Radio) system, that is, a system designed to suit the TETRA (ETSI) standard. However, the present invention is not limited to TETRA compatible communication systems and may also be used in push-to-talk communication systems which do not, or not fully, comply with the TETRA standard.

As can be seen in Fig. 1, only a single enhancing device 3 is used with a plurality of user devices (that is, handsets) 2. According to the present invention, a single enhancing device coupled to the main user device will typically suffice to enhance the signal quality of the communication network. In certain cases, however, a second or even third enhancing device may be used in a single communication system (typically consisting of a group of cooperating user devices located in each other's proximity). Still, the number of enhancing devices will, in accordance with the present invention, be substantially smaller than the number of user devices.

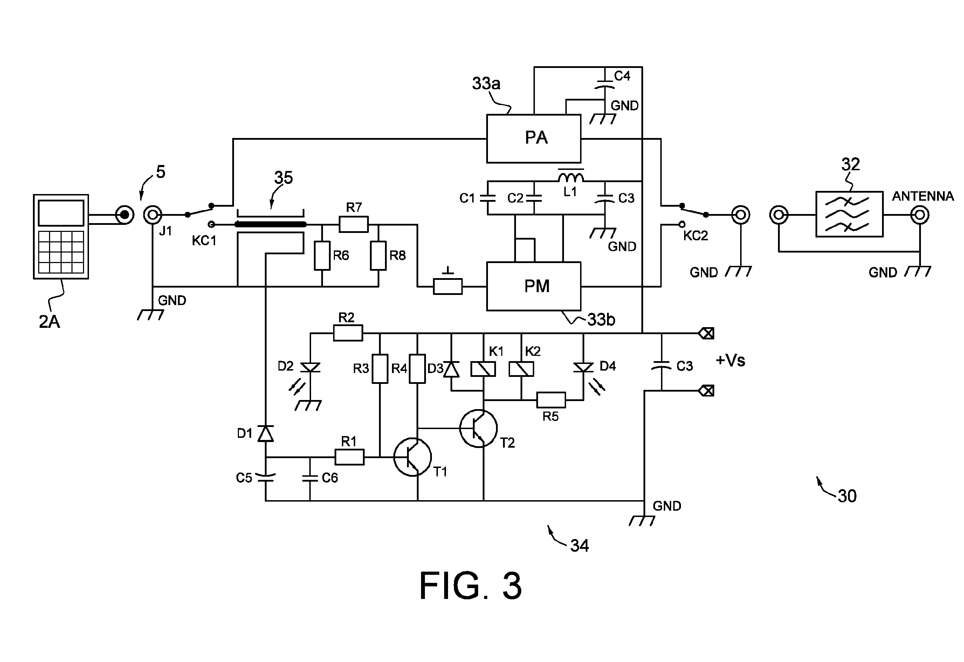

A preferred embodiment of the enhancing device 3 according to the present invention is shown in more detail in Fig. 2. The enhancing device 3 of Fig. 2 comprises an antenna (AT) 31, a band-pass filter 32, a bidirectional amplifier 33, a control (CL) unit 34 and a sensor (S) 35. In a typical embodiment, as shown for example in Fig. 3, the bidirectional amplifier 33, the control unit 34 and the sensor 35 will together constitute a physical electronic unit (30 in Fig. 3) which can be connected to the antenna 31 to form the enhancing device 3. The band-pass filter 32 is in some embodiments part of the electronic unit 30 but may also be constituted by a separate physical unit, which is connected between the electronic unit 30 and the antenna unit 31, as illustrated in Fig. 3.

The bidirectional amplifier 33 receives radio signals to be transmitted from the (main) user unit 2A via a connection 5, which preferably is constituted by a wired connection but may also be constituted by a wireless connection. These radio signals would, in the absence of the enhancing device 3, be fed to the (built-in) antenna of the user unit 2A (depending on the particular user unit, the radio signals may be fed to both the user unit's own antenna and the enhancing device 3). The sensor 35 detects whether the user unit 2A is sending or receiving and sends a detection signal to the control unit 34, which in dependence of the detection signal from the sensor switches the bidirectional amplifier 33 in a sending or receiving mode. In the present example, in which the user unit 2A produces radio signals and is therefore sending, the bidirectional amplifier will be switched in the sending mode.

The frequency range of the amplified signal is limited by the band-pass filter 32, which is preferably designed to match a suitable TETRA frequency. The thus filtered radio signals are fed to the antenna 31 and broadcast. In use, the directional antenna 31 is aimed at the other user devices, or at least at those user devices of the system which suffer from a bad reception, for example user devices located inside buildings, caves or tunnels.

The antenna 31 may also receive radio signals from the other user devices (2 in Fig. 1). These radio signals are filtered by the (bidirectional) band-pass filter 32 and fed to the bidirectional amplifier 33. If the bidirectional amplifier 33 is in the receiving mode (as determined by the control unit 34), it will amplify the received radio signals and pass them on to the user unit 2A via the connection 5.

According to a further aspect of the present invention, the bidirectional amplifier 33 is designed for providing a greater amplification in the receiving direction than in the transmitting direction. In this way, received signals have a relatively large amplification, thus improving the audibility of received signals. Transmitted signals receive a smaller amplification in order to limit the signal level differences between the main user unit (provided with the enhancing device) and the other user units: a large signal level difference would make virtually simultaneous primary-secondary and secondary-secondary communication (see Fig. 1) very difficult.

A merely exemplary embodiment of the enhancing device 3 is shown in more detail in Fig. 3. The embodiment of Fig. 3 also comprises a band-pass filter 32, a bidirectional amplifier 33, a control unit 34 and a sensor (unit) 35. A main user unit 2A is coupled to an input J1 of the enhancing device 3 by a connection 5. The band-pass filter 32 may be coupled to the antenna (not shown in Fig. 3).

In the embodiment of Fig. 3, the bidirectional amplifier comprises a first amplifier part 33a, which amplifies in the transmitting direction, and a second amplifier part 33b, which amplifiers in the receiving direction. The first amplifier part 33a is, in the embodiment shown, constituted by a pre-amplifier (PA), while the second amplifier part 33b is constituted by a power module (PM). Relay switches KC 1 and KC2 determine which of the two amplifier parts is connected to the user unit 2A and the band-pass filter 32.

The relay switches KC1 and KC2 are operated by relays K1 and K2 respectively. These relays K1 and K2 are part of the control unit 34, which comprises a transistor pair T1, T2 to produce the relay current in response to the detection signal produced, in turn, by the sensor 35.

In the embodiment shown, the sensor 35 comprises a transformer so as to provide a galvanically isolated coupling with the connection 5.

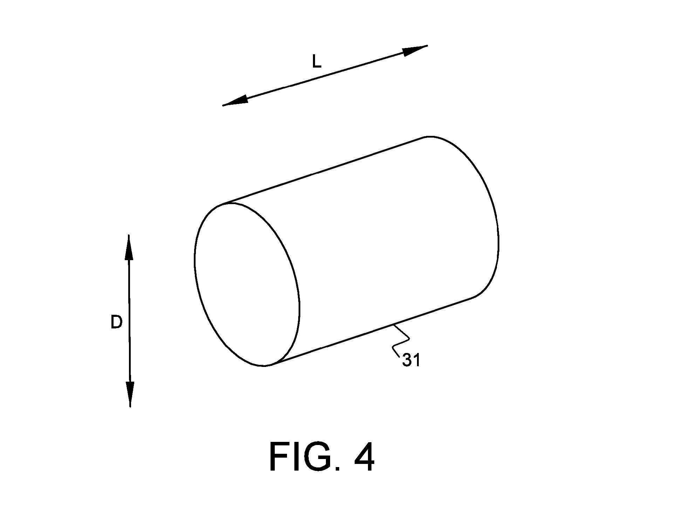

The merely exemplary can antenna 31 illustrated in Fig. 4 has a substantially cylindrical body having a length L and a diameter D. One end of the cylinder is open while the opposite end is closed. Inside the cylindrical body an antenna element (not shown) is located.

The present invention is based upon the insight that the combination of a directional antenna a bidirectional amplifier and a suitable amplifier control circuit provides a simple yet effective way to enhance the communication in a push-to-talk communication system. The present invention benefits from the further insights that a can antenna is particularly suitable for the present purpose, and that only a single device according to the present invention is sufficient to enhance the signal quality in a push-to-talk communication system.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

## Claims

1. A device (3) for enhancing communication in a push-to-talk communication system (1) comprising user units (2) arranged for radio communication, one user unit (2A) being designated as main user unit and the device being arranged for use with the main user unit, the device comprising:
• a directional antenna (31) for transmitting and receiving radio signals,
• a band-pass filter (32) for selecting a frequency band of the radio signals,
• a bidirectional amplifier (33) for amplifying radio signals alternatingly in a transmitting and in a receiving direction,
• a control unit (34) for controlling the bidirectional amplifier (32) in response to a sensor signal, and
• a sensor (35) for detecting whether the user unit (2A) is transmitting or receiving and for producing the sensor signal in response thereto, which sensor is galvanically isolated from the user unit.

2. The device according to claim 1, wherein the bidirectional amplifier (33) is arranged for providing a greater amplification in the receiving direction than in the transmitting direction.

3. The device according to claim 1 or 2, wherein the directional antenna (31) has a high gain, preferably at least 10 dBA.

4. The device according to claim 1, 2 or 3, wherein the directional antenna (31) has a substantially cylindrical body, the diameter of the body preferably being at least 50 cm, more preferably at least 60 cm.

5. The device according to any of the preceding claims, wherein the band-pass filter (32) is designed for a terrestrial trunked radio direct mode operations frequency range.

6. The device according to any of the preceding claims, wherein the communication system (1) is a TETRA system.

7. The device according to any of the preceding claims, wherein the sensor (35) comprises a transformer so as to provide a galvanically isolated coupling.

8. The device according to any of the preceding claims, arranged for a wired connection (5) with the user unit (2A).

9. The device according to any of the preceding claims, arranged for a wireless connection (5) with the user unit (2A).

10. A push-to-talk communication system (1), comprising user units (2) arranged for radio communication, one user unit (2A) being designated as main user unit, the system further comprising a device (3) for enhancing communication, the device being arranged for use with the main user unit, the device comprising:
• a directional antenna (31) for transmitting and receiving radio signals,
• a band-pass filter (32) for selecting a frequency band of the radio signals,
• a bidirectional amplifier (33) for amplifying radio signals alternatingly in a transmitting and in a receiving direction,
• a control unit (34) for controlling the bidirectional amplifier (32) in response to a sensor signal, and
• a sensor (35) for detecting whether the user unit (2A) is transmitting or receiving and for producing the sensor signal in response thereto, which sensor is galvanically isolated from the user unit.

11. The communication system according to claim 10, which is a TETRA system.

12. A method of enhancing communication in a push-to-talk communication system (1) comprising user units (2) arranged for radio communication, one user unit (2A) being designated as main user unit, the method comprising the step of coupling a device (3) for enhancing communication to the main user unit, the device comprising:
• a directional antenna (31) for transmitting and receiving radio signals,
• a band-pass filter (32) for selecting a frequency band of the radio signals,
• a bidirectional amplifier (33) for amplifying radio signals alternatingly in a transmitting and in a receiving direction,
• a control unit (34) for controlling the bidirectional amplifier (32) in response to a sensor signal, and
• a sensor (35) for detecting whether the user unit (2A) is transmitting or receiving and for producing the sensor signal in response thereto, which sensor is galvanically isolated from the user unit.

13. The method according to claim 12, wherein the communication system (1) is a TETRA system.

14. The method according to claim 12 or 13, wherein the communication system (1) operates in direct mode.
